# EUROPÄISCHE PATENTSCHRIFT

(11) **EP 0 619 246 B1**
(45) Veröffentlichungstag und Bekanntmachung des Hinweises auf die Patenterteilung: **22.10.1997**
(21) Anmeldenummer: 93105850.7
(22) Anmeldetag: 08.04.1993
(51) Int. Cl.: B65G 1/137, B65G 47/49

(54) **Warentransportbehälter mit einem Radiofrequenz-Transponder**
Transport container for goods having a radiofrequency-transponder
Récipient de transport de marchandises avec transpondeur à radiofréquence

(43) Veröffentlichungstag der Anmeldung: 12.10.1994
(73) Patentinhaber: Seitz, Peter, D-55543 Bad Kreuznach (DE)
(72) Erfinder: Seitz, Peter, D-55543 Bad Kreuznach (DE)
(74) Vertreter: Kodron, Rudolf S., Dipl.-Ing.

(56) Entgegenhaltungen:
- DE-A- 3 711 237
- DE-B- 1 919 626
- DE-U- 8 913 610

## Beschreibung

Die Erfindung betrifft einen Warentransportbehälter für die Auftragszusammenstellung in einem Großhandelslager oder dergl. mit einem Radiofrequenz-Transponder.

Bei der Auftragszusammenstellung in großen Materiallagerräumen werden derartige meist aus Kunststoff bestehende kastenförmige Warentransportbehälter auf verzweigten Förderanlagen mit selbsttätiger Wegsteuerung bewegt und mit den verschiedensten Waren befüllt. Die Transportbehälter sind mit einem Kennungscode versehen, dessen Signal während des Transports durch eine entsprechende elektronische Einrichtung aufgenommen und an den Rechner geleitet wird, der dann den betreffenden Transportbehälter in der Weise steuert, daß er nacheinander zu denjenigen Stellen im Lager gelangt, wo er die benötigten Waren aufnimmt.

In der DE-OS 37 11 237 wird beispielsweise vorgeschlagen, anstelle der häufig angewandten lichtoptischen Methoden der Zeichenerkennung, bei welcher eine Strichcodierung verwendet wird, jedem Behälter einen Transponder zuzuordnen, der ein Signalcode emittiert, welcher dann durch eine entsprechende Einrichtung empfangen wird, die zur Steuerung der Förderanlage dient.

Der Erfindung liegt die Aufgabe zugrunde, einen solchen Transponder derartig auszubilden und an derjenigen Stelle des Transportbehälters zu befestigen, die leicht zugänglich und für die Signalgebung und den Signalempfang optimal ist. Gleichzeitig soll die Befestigung des Transponders am Transportbehälter bei geringstmöglichem Formveränderungsbedarf des Transportbehälters und möglichst platzsparend erfolgen.

Gelöst wird diese Aufgabe nach der Erfindung dadurch, daß der Transponder in der Mitte im Innenraum des Transportbehälters in oder auf der Bodenplatte des Transportbehälters angeordnet ist und entweder als flache Scheibe bzw. Ringscheibe ausgebildet und in einer entsprechend geformten Ausnehmung in der Bodenplatte oder in einer unterseitigen Ausnehmung in einem auf der Bodenplatte mittig befestigten Schutzdeckel untergebracht oder als Stab ausgebildet und in einer Ausnehmung in einer auf der planen Bodenplatte mittig befestigten Tragleiste untergebracht ist.

Der als flache Scheibe bzw. Ringscheibe ausgebildete Transponder ist zweckmäßigerweise in einer unterseitigen Ausnehmung in einem auf der Bodenplatte mittig befestigten Schutzdeckel untergebracht.

Bei einer Ausführungsform kann dieser Schutzdeckel unterseitig mit einer kreisförmigen Feder in eine entsprechend bemessene kreisförmige Nut in einem in der Bodenplatte eingeformten Ringwall eingreifen und dort verschweißt sein.

Bei einer anderen Ausführungsform kann der Schutzdeckel mittels eines auf seiner Unterseite angebrachten Klebers auf der planen Bodenplatte des Transportbehälters festgeklebt sein.

Bei einer weiteren Ausführungsform nach der Erfindung wird ein stabförmiger Transponder verwendet, der in einer Ausnehmung eines Verschlußstabs untergebracht ist, welcher mittels zweier federnder Arretierarme in die Ausnehmung in einer Tragleiste eingeklipst ist, die an der Bodenplatte des Transportbehälters befestigt ist.

Zweckmäßigerweise ist der stabförmige Transponder durch eine Schutzhülle geschützt, die den Transponder in der Ausnehmung des Verschlußstabes festklemmend hält.

Die Tragleiste kann zwei Bohrungen für zwei die plane Bodenplatte durchgreifende Befestigungsschrauben aufweisen, so daß die Tragleiste an der Bodenplatte entweder angeschweißt, angeklebt und/oder angeschraubt werden kann.

Nachfolgend werden vier Ausführungsformen der Erfindung anhand der Zeichnung näher erläutert und beschrieben.

Es zeigen :
- Figur 1 :: eine erste Ausführungsform eines ringschreibenförmigen Transponders, der ohne Schutzdeckel in der Mitte der Bodenplatte des Transportbehälters in einer ausgefrästen Ausnehmung desselben untergebracht ist,
- Figuren 2 bis 5 :: eine zweite Ausführungsform eines ringscheibenförmigen Transponders, der durch einen Schutzdeckel abgedeckt ist,
- Figuren 6 bis 10 :: eine dritte Ausführungsform, bei welcher ein stabförmiger Transponder mithilfe einer Tragleiste an der planen Bodenfläche des Transportbehälters befestigt ist
und
- Figur 11 :: eine vierte Ausführungsform, bei welcher ein ringscheibenförmiger Transponder in einer unterseitigen Ausnehmung in einem auf der planen Bodenplatte des Transportbehälters aufgeklebten Schutzdeckel untergebracht ist.

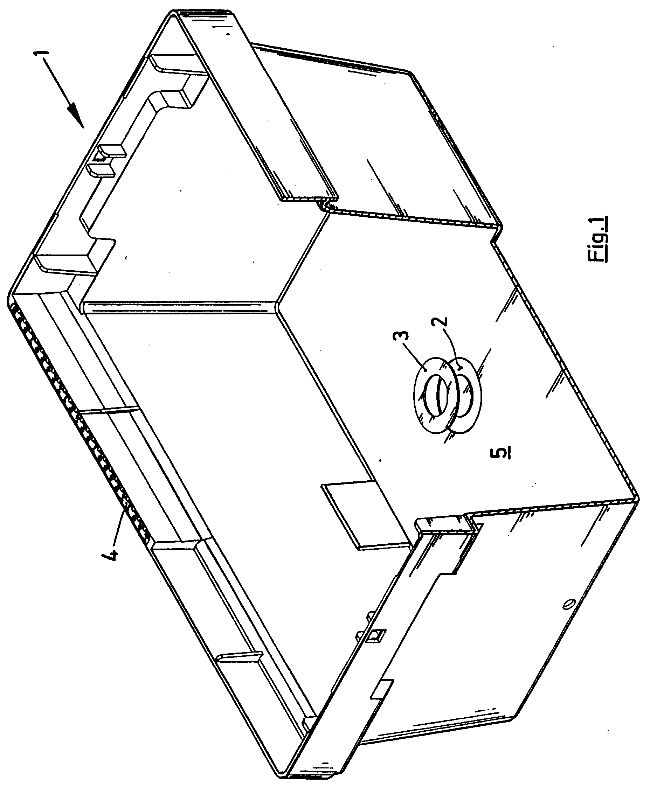

Die in Figur 1 dargestellte erste Ausführungsform zeigt einen Transportbehälter 1 in Schrägansicht, der an seinem Längsrand eine Steckcodierung 4 aufweist.

Ein solcher Transportbehälter 1 läßt sich einfach in der Weise von einem Steckcodierungssystem auf ein Transpondersystem umrüsten, indem in der Mitte der Bodenplatte 5 eine ringförmige Vertiefung 2 ausgefräst wird, in welche ein ringscheibenförmiger Transponder 3 eingefügt und eingeklebt wird. Wenn Arzneimittel in dem Transportbehälter 1 gesammelt werden, dann bedarf der ringförmige Transponder 3 keiner besonderen Schutzabdeckung gegen mechanische Beschädigung.

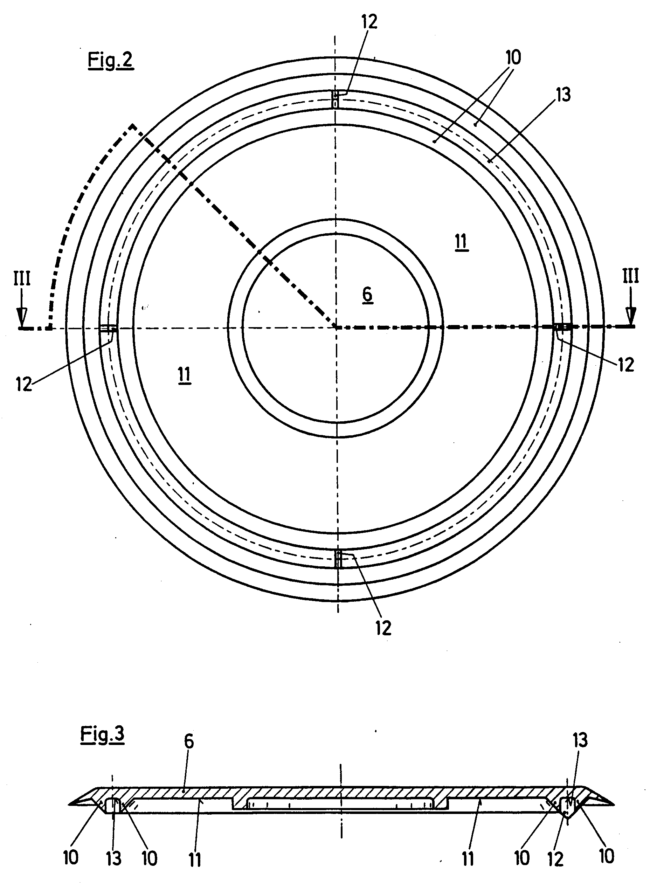

Die in den Figuren 2 bis 5 gezeigte zweite Ausführungsform der Erfindung ist dagegen eine solche, bei welcher ein Schutzdeckel 6 Anwendung findet, welcher den darunter angeordneten ringförmigen Transponder 9 schützend abdeckt, so daß in dem Sammelbehälter 1 auch große schwere Teile gesammelt werden können, wie sie in Großhandelslagern von Kraftfahrzeugteilen vorhanden sind.

Der in den Figuren 2 und 3 vergrößert dargestellte Schutzdeckel 6 besitzt unterseitig die ringförmige Ausnehmung 11 für den ringscheibenförmigen Transponder 9. Die Ausnehmung 11 wird durch zwei angeformte, abwärts gerichtete Rippen 10,10 gebildet, welche den Freiraum 13 zwischen sich einschließen.

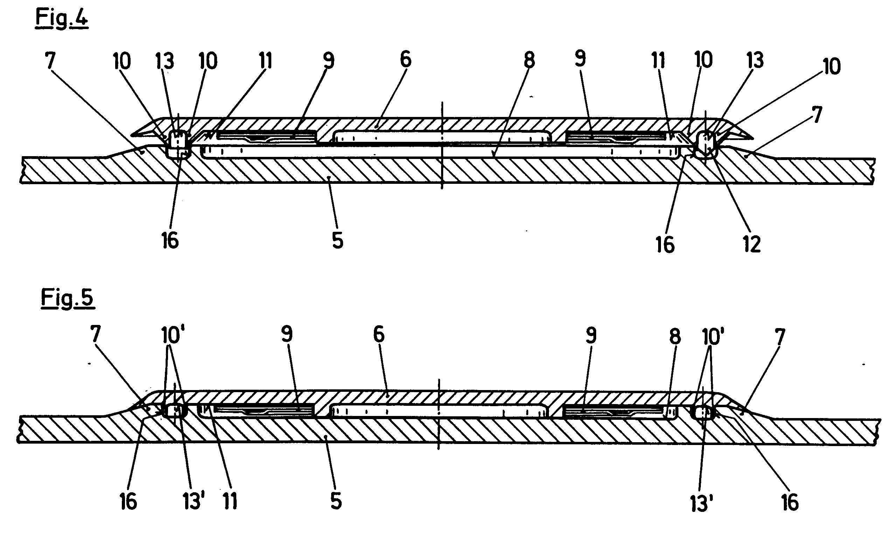

Die beiden Rippen 10,10 bilden eine kreisförmige Feder, die in eine kreisförmige Nut 16 in einem Ringwall 7 eingreift, der gemäß Figuren 4 und 5 auf der Oberseite der Bodenplatte 5 eingeformt ist.

Mithilfe der vier an der Unterseite des Schutzdeckels 6 angeformten Zentrierspitzen 12 läßt sich der Schutzdeckel 6 in die Ringnut 16 einsetzen, so daß der Schutzdeckel 6 in der in Figur 5 gezeigten Weise in die Ringnut 16 eingepreßt und dort verschweißt werden kann. Die Rippen 10,10 sind dann zu den Rippen 10',10' verformt und der ursprüngliche Freiraum 13 wird zum verengten, verbleibenden Freiraum 13' verkleinert. Wegen des in die Bodenplatte 5 eingeformten Ringwalls 7 bleibt in der Mitte ein Aufnahmeraum 8 für den ringscheibenförmigen Transponder 9 frei.

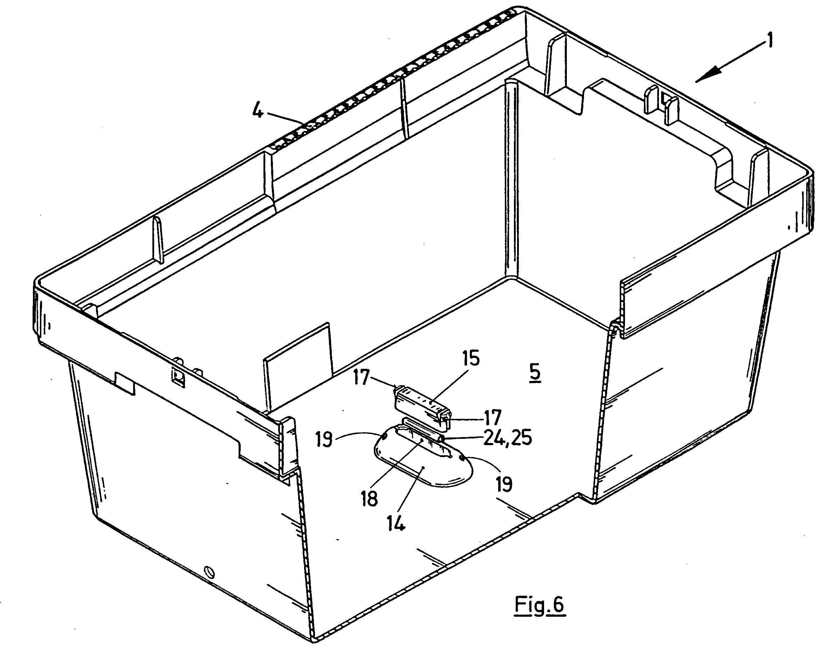

Auch die in den Figuren 6 bis 10 dargestellte dritte Ausführungsform der Erfindung ist für die Umrüstung von Warentransportbehältern 1 geeignet, die schon mit einer Strichcodierung 4 ausgestattet sind.

Bei dieser dritten Ausführungsform findet eine in der Mitte der Bodenplatte 5 befestigte Tragleiste 14 mit einer Ausnehmung 18 Anwendung, die zur Aufnahme eines Verschlußstabs 15 dient, in dessen Längsausnehmung 22 ein stabförmiger Transponder 25-durch eine Schutzhülle 24 geschützt- untergebracht ist.

Der Verschlußstab 15 besitzt an seinen beiden Stirnenden federnde Arretierarme 17,17, mithilfe welcher der Verschlußstab 15 in die Tragleiste 14 eingeklipst ist.

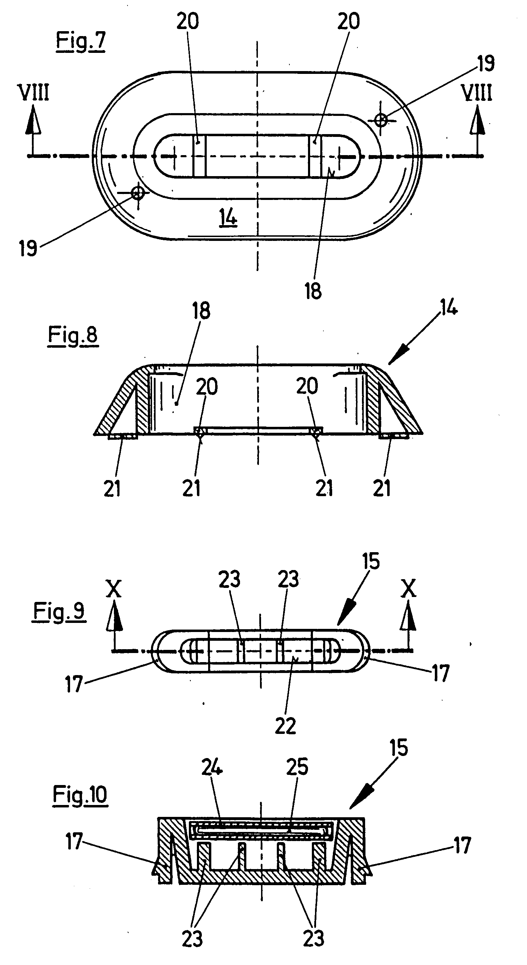

Die Figuren 7 bis 10 zeigen hinsichtlich der konstruktiven Einzelheiten, daß Querrippen 20,20 in der Tragleiste 14 den Transponder 25 untergreifen und am Herausfallen aus dem Verschlußstab 15 hindern.

Die Querrippen 23 im Verschlußstab 15 sichern den Transponder 25 nach oben hin und halten ihn in seiner tiefstmöglichen Lage fest, damit ein möglichst großer räumlicher Abstand zu den metallischen Waren im Transportbehälter geschaffen wird, von denen elektromagnetische Störeinflüsse ausgehen können.

An der Unterseite der Tragleiste 14 können Rippen 21 zum Verschweißen vorgesehen sein.

Alternativ oder zusätzlich sind in der Tragleiste 14 Bohrungen 19,19 vorgesehen, die zur Aufnahme von in der Zeichnung nicht dargestellten Befestigungsschrauben dienen, welche von unten her durch entsprechende Bohrungen den Behälterboden 5 durchgreifen.

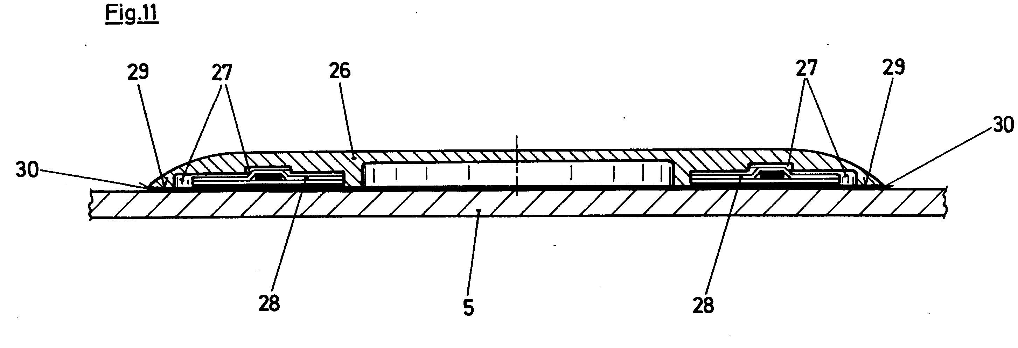

Die Figur 11 zeigt eine weitere, der zweiten Ausführungsform gemäß Figuren 2 bis 5 ähnliche Ausführungsform, bei welcher der ringscheibenförmige Transponder 28 in einer unterseitigen Ausnehmung 27 im Schutzdeckel 26 untergebracht ist, der mittels eines auf seiner Unterseite 30 aufgebrachten Klebers 30 auf der planen Bodenplatte 5 des Transportbehälters 1 befestigt ist.

Die beschriebenen zwei unterschiedlich geformten Transponder und ihre Befestigung am Transportbehälter sind für die Neuherstellung und für die Umrüstung von Transportbehältern deshalb besonders geeignet, weil der benötigte Aufwand an Mitteln und Arbeit äußerst gering ist.

## Patentansprüche

1. Warentransportbehälter für die Auftragszusammenstellung in einem Großhandelslager oder dergleichen mit einem Radiofrequenz-Transponder
dadurch gekennzeichnet, daß
- der Transponder (3,9,25,28) in der Mitte im Innenraum des Transportbehälters (1) in oder auf der Bodenplatte (5) des Transportbehälters (1) angeordnet ist
und
- entweder als flache Scheibe bzw. Ringscheibe (3,9,28) ausgebildet und in einer entsprechend geformten Ausnehmung (2) in der Bodenplatte (5) oder in einer unterseitigen Ausnehmung (11,27) in einem auf der Bodenplatte (5) mittig befestigten Schutzdeckel (6,26) untergebracht
- oder als Stab (24,25) ausgebildet und in einer Ausnehmung (18) in einer auf der planen Bodenplatte (5) mittig befestigten Tragleiste (14) untergebracht ist.

2. Warentransportbehälter nach Anspruch 1,
dadurch gekennzeichnet, daß
der Schutzdeckel (6) unterseitig mit einer kreisförmigen Feder (10,13,10) in eine entsprechend bemessene kreisförmige Nut (16) in einem in der Bodenplatte (5) eingeformten Ringwall (7) eingreift und dort verschweißt (10',13',10') ist.

3. Warentransportbehälter nach Anspruch 1,
dadurch gekennzeichnet, daß
der Schutzdeckel (26) mittels eines auf seiner Unterseite (29) angebrachten Klebers (30) auf der planen Bodenplatte (5) des Transportbehälters (1) festgeklebt ist.

4. Warentransportbehälter nach Anspruch 1,
dadurch gekennzeichnet, daß
- in die Ausnehmung (18) der Tragleiste (14) ein Verschlußstab mittels zweier federnder Arretierarme (17,17) eingeklipst ist,
- in dem in einer Ausnehmung (22) der durch eine Schutzhülle (24) geschützte stabförmige Transponder (25) untergebracht ist.

5. Warentransportbehälter nach Anspruch 4,
dadurch gekennzeichnet, daß
die Tragleiste (14) zwei Bohrungen (19,19) für zwei die Bodenplatte (5) durchgreifende Befestigungsschrauben aufweist.

## Claims

1. Transport container for goods for assembling orders in a wholesale warehouse or the like, with a radio frequency transponder, **characterised in that**
- the transponder (3, 9, 25, 28) is arranged in the centre of the interior space of the transport container (1) in or on the base plate (5) of the transport container (1),
and
- either designed as a flat plate or circular disc (3, 9, 28) and accommodated in a respectively shaped cutout (2) in the base plate (5) or in a bottomsided cutout (11, 27) in a protective cover (6, 26) which is centrally mounted on the base plate,
- or designed as a rod (24, 25) and accommodated in a cutout (18) in a support ledge (14) which is centrally mounted on the plane base plate (5).

2. Transport container for goods according to Claim 1,
**characterised in that** the protective cover (6) engages at the bottom side with a circular spring (10, 13, 10) a respectively dimensioned circular groove (16) in a circular wall (7) which is shaped into the base plate (5) and welded thereinto.

3. Transport container for goods according to Claim 1,
**characterised in that** the protective cover (26) glued by means of an adhesive (30) applied to its bottom side (29) onto the plane base plate (5) of the transport container (1).

4. Transport container for goods according to Claim 1,
**characterised in that**
- a closure pin is clipped into the recess (18) of the support rod (14) by means of two springy arresting arms (17, 17);
- in which the rodshaped transponder (25) is accommodated in a cutout (22) which is protected by a protective cover (24).

5. Transport container for goods according to Claim 4,
**characterised in that** the transport ledge (14) comprises two bores (19, 19) for two fixing bolts which pass through the base plate (5).

## Revendications

1. Récipient de transport de marchandises pour le groupement des commandes dans un entrepôt de commerce en gros ou analogues, avec un transpondeur à radiofréquence, **caractérisé en ce** que
- le transpondeur (3, 9, 25, 28) est disposé au centre de l'intérieur du récipient de transport (1) ou sur la plaque de fond (5) du récipient de transport (1), et
- réalisé sous la forme d'un disque plat et respectivement d'une rondelle (3, 9, 28) et logé dans un évidement (2) de forme adéquate dans la plaque de fond (5) ou dans un évidement (11, 27) dans la face inférieure ménagé dans un couvercle de protection (6, 26) fixé au centre de la plaque de fond (5),
- ou réalisé sous la forme d'une barre (24, 25) et logé dans un évidement (18) dans une baguette de support (14) fixée au centre sur la plaque de fond (5) plane.

2. Récipient de transport de marchandises selon la revendication 1, caractérisé en ce que la surface inférieure du couvercle de protection (6) s'engage avec un ressort circulaire (10, 13, 10) dans une rainure (16) de forme circulaire correspondante ménagée dans un bourrelet annulaire (7) moulé dans la plaque de fond (5), et soudée dans celui-ci (10', 13', 10').

3. Récipient de transport de marchandises selon la revendication 1, caractérisé en ce que le couvercle de protection (26) est collé sur la plaque de fond (5) plane du récipient de transport (1) au moyen d'une colle (30) appliquée sur sa surface inférieure (29).

4. Récipient de transport selon la revendication 1, caractérisé en ce que
- dans l'évidement (18) de la baguette de support (14) est encliquetée une barre d'obturation au moyen de deux bras d'arrêt (17, 17) élastiques,
- dans un évidement (22) est logé le transpondeur (25) en forme de barre protégé par une enveloppe protectrice (24).

5. Récipient de transport de marchandises selon la revendication 4, caractérisé en ce que la baguette de support (14) présente deux alésages (19, 19) pour deux vis de fixation qui traversent la plaque de fond (5).
